# EUROPÄISCHE PATENTSCHRIFT

(11) **EP 3 292 627 B1**
(45) Veröffentlichungstag und Bekanntmachung des Hinweises auf die Patenterteilung: **10.04.2019**
(21) Anmeldenummer: 16716863.2
(22) Anmeldetag: 15.04.2016
(51) Int. Cl.: H02P 1/04, F25B 49/02

(54) **HAUSHALTSGERÄT MIT EINEM ELEKTRISCHEN ANTRIEB**
DOMESTIC APPLIANCE HAVING AN ELECTRIC DRIVE
APPAREIL ÉLECTROMÉNAGER COMPRENANT UN SYSTÈME D'ENTRAÎNEMENT ÉLECTRIQUE

(30) Priorität: 05.05.2015 DE 102015208259
(43) Veröffentlichungstag der Anmeldung: 14.03.2018
(73) Patentinhaber: BSH Hausgeräte GmbH, 81739 München (DE)
(72) Erfinder: PAULDURO, Achim, 89129 Albeck (DE); BECKMANN, Tommy, 78247 Hilzingen (DE); KLEIN, Moritz, 89537 Giengen (DE)
(86) Internationale Anmeldenummer: PCT/EP2016/058325
(87) Internationale Veröffentlichungsnummer: WO 2016/177547

(56) Entgegenhaltungen:
- WO-A2-2011/157553
- CN-A- 102 635 540
- DE-A1-102010 042 492
- US-A- 4 912 936
- US-A1- 2007 070 561
- US-B2- 7 221 121

## Beschreibung

Moderne Haushaltsgeräte, wie Haushaltskältegeräte, Haushaltswaschmaschinen oder Haushaltswäschetrockner, umfassen in der Regel einen elektrischen Antrieb, welcher bei Vorliegen einer Nennversorgungsspannung in der Regel mit dem benötigten Drehmoment angelassen werden kann. Bei schwankenden Amplituden einer Versorgungsspannung kann unter Umständen nicht genug Energie an den elektrischen Antrieb geliefert werden, um das benötigte Drehmoment aufzubringen, was sogar zu einem Fehlstart des elektrischen Antriebs führen kann.

Die Patentschrift US 7,221,121 B2 offenbart einen Frequenzkonverter zum Steuern eines Elektromotors.

Die Offenlegungsschrift CN 102635540 A offenbart ein Verfahren zum Betreiben eines Kompressors.

Die Patentschrift US 4,912,936 offenbart ein Verfahren zum Steuern eines Kompressors eines Kältegeräts.

Die Offenlegungsschrift US 2007/070561 A1 offenbart ein Verfahren und ein System zum Steuern eines Anlassens eines Motors zum Antreiben eines Kompressors.

Die Offenlegungsschrift DE 10 2010 042 492 A1 offenbart eine Antriebsvorrichtung zum Antreiben einer Komponente eines Hausgeräts.

Zum Anlassen eines elektrischen Antriebs in einem Haushaltsgerät kann beispielsweise das in der WO 2011/157553 beschriebene Verfahren vorteilhaft eingesetzt werden. Hierbei wird zunächst ein bewegliches Antriebselement des elektrischen Antriebs, beispielsweise ein Rotor des elektrischen Antriebs, in eine vorbestimmte Position gebracht, um den elektrischen Antrieb effizient anzulassen. Das in der WO 2011/157553 beschriebene Verfahren kann insbesondere zur Steuerung eines Anlassvorgangs eines Kältemittelverdichters eines Haushaltskältegerätes mit einem innerhalb eines Kältekreislaufs angeordneten Stoppventil herangezogen werden. Ein beispielhaftes Haushaltsgerät mit einem derartigen Stoppventil ist in der Druckschrift WO 2008/025650 A1 beschrieben.

Es ist die Aufgabe der vorliegenden Erfindung, ein effizientes Konzept zum Anlassen eines elektrischen Antriebs in einem Haushaltsgerät zu schaffen.

Diese Aufgabe wird durch die Merkmale der unabhängigen Ansprüche gelöst. Vorteilhafte Weiterbildungsformen sind den abhängigen Ansprüchen zu entnehmen.

Gemäß einem Aspekt betrifft die Erfindung ein Haushaltskältegerät mit den Merkmalen des unabhängigen Anspruchs 1.

Die Anlassvorgänge können beispielsweise in einem Speicher des Haushaltsgerätes beispielsweise programmtechnisch vorgespeichert sein. Dadurch kann die Steuerung den jeweiligen Anlassvorgang auswählen und ausführen.

Dadurch wird in vorteilhafter Weise erreicht, dass ein dem jeweiligen Spannungswert zugeordneter Anlassvorgang aus einer Mehrzahl von unterschiedlichen Anlassvorgängen ausgewählt werden kann, um den elektrischen Antrieb effizient anzulassen und damit anzutreiben.

Gemäß einer Ausführungsform ist der Schwellwert ein Amplitudennennwert einer Netzspannung oder ein Amplitudennennwert einer gleichgerichteten Netzspannung.

Die Spannungsversorgung weist einen Gleichrichter und eine dem Gleichrichter nachgeschaltete Glättungskapazität auf. Die Norm-Netzspannung kann beispielsweise 120 V oder 230 V betragen. Die Spannungsversorgung weist ferner einen der Glättungskapazität nachgeschalteten Inverter auf. Der Inverterschaltkreis kann aber auch in dem Stellglied implementiert werden. Der Gleichrichter sowie die Glättungskapazität, ggf. mit dem Inverterschaltkreis, bilden Elemente eines Zwischenschaltkreises. Der Inverterschaltkreis kann beispielsweise in der Spannungsversorgung implementiert sein.

Gemäß einer Ausführungsform kann die Steuerung in einer Invertersteuerung oder in einer Gerätesteuerung implementiert werden.

Durch die Wahl des Anlassvorgangs kann hierbei in besonders vorteilhafter Weise erreicht werden, dass ein unnötiges Entladen und Wiederaufladen der Glättungskapazität bei einer Unterspannung verhindert werden können, wodurch ein Fehlstart des elektrischen Antriebs oder das Entstehen unnötiger Energieverluste vermieden werden kann.

Gemäß der Erfindung ist die Steuerung gemäß dem ersten Anlassvorgang ausgebildet, einen Rotor des elektrischen Antriebs zu positionieren, und den elektrischen Antrieb nach der Positionierung des Rotors mit einem Anlassstrom zu bestromen, welcher einem Nennstrom oder einem maximalen Startstrom des elektrischen Antriebs entspricht. Die Positionierung des Rotors kann beispielsweise, wie es in der Druckschrift WO 2011/157553 A2 beschrieben ist, durchgeführt werden. Dadurch wird erreicht, dass bei Vorliegen der Nennspannung auch ein an sich bekannter Anlassvorgang verwendet werden kann.

Gemäß der Erfindung ist die Steuerung gemäß dem zweiten Anlassvorgang ausgebildet, den elektrischen Antrieb mit einem Anlassstrom zu bestromen, welcher geringer als ein Nennstrom oder geringer als ein maximaler Startstrom des elektrischen Antriebs ist. Hierbei wird auf eine vorherige Positionierung eines Rotors des elektrischen Antriebs verzichtet.

Gemäß einer Ausführungsform ist die Steuerung gemäß dem zweiten Anlassvorgang ausgebildet, den elektrischen Antrieb in einem ersten Zeitintervall mit einem Anlassstrom zu bestromen, welcher einem Nennstrom oder einem maximalen Startstrom des elektrischen Antriebs entspricht oder geringer als der Nennstrom oder der maximale Startstrom ist, den elektrischen Antrieb in einem zweiten Zeitintervall, welcher dem ersten Zeitintervall folgt, mit einem gegenüber dem Anlassstrom reduziertem Strom zu bestromen oder die Bestromung des elektrischen Antriebs in dem zweiten Zeitintervall zu unterbrechen, und den elektrischen Antrieb in einem dritten Zeitintervall, welcher dem zweiten Zeitintervall folgt, erneut mit dem Anlassstrom zu bestromen. Dadurch wird in vorteilhafter Weise erreicht, dass beispielsweise eine Glättungskapazität eines Zwischenschaltkreises wiederaufgeladen werden kann, bevor die Bestromung des elektrischen Antriebs mit dem Anlassstrom fortgesetzt wird.

Gemäß einem nicht von der Erfindung umfassten Beispiel ist die Steuerung ausgebildet, einen Rotor des elektrischen Antriebs vor dem Beginn des ersten Zeitintervalls zu positionieren.

Gemäß einer Ausführungsform ist das Haushaltsgerät ein Haushaltskältegerät mit einem Kältemittelverdichter mit dem elektrischen Antrieb, einem dem Kältemittelverdichter nachgeschalteten Kältemittelverflüssiger, einem dem Kältemittelverflüssiger nachgeschaltetem Stoppventil oder ist das Haushaltsgerät ein Wäschepflegegerät oder ein Wäschetrockner oder eine Wärmepumpe. Durch die spannungsabhängige Wahl des Anlassvorgangs wird erreicht, dass der elektrische Antrieb auch bei einem geschlossenen Stoppventil angelassen werden kann.

Gemäß einer Ausführungsform ist die Steuerung gemäß dem zweiten Anlassvorgang ausgebildet, bei geöffnetem Stoppventil den elektrischen Antrieb mit einem Anlassstrom zu bestromen, welcher geringer als ein Nennstrom oder als ein maximaler Startstrom des elektrischen Antriebs ist. Das Stoppventil ist beispielsweise dann geöffnet, wenn ein Kältemittelaustausch zwischen dem Verflüssiger und dem Wärmetauscher stattfinden soll. In diesem Fall wird in vorteilhafter Weise ausgenutzt, dass ein Kältemitteldruck bereits reduziert ist, so dass eine vorherige Positionierung des beweglichen Antriebselementes, wie eines Rotors, entfallen kann.

Gemäß einer Ausführungsform ist die Steuerung programmtechnisch eingerichtet und ausgebildet, ein Steuerprogramm zum Ausführen des ersten Anlassvorgangs oder des zweiten Anlassvorgangs aus einem Speicher auszulesen und das ausgelesene Steuerprogramm auszuführen, um den jeweiligen Anlassvorgang auszuführen.

Gemäß einem zweiten Aspekt betrifft die Erfindung ein Verfahren mit den Merkmalen des unabhängigen Anspruchs 7.

Gemäß der Erfindung wird gemäß dem ersten Anlassvorgang ein Rotor des elektrischen Antriebs positioniert, und der elektrische Antrieb wird nach der Positionierung des Rotors mit einem Anlassstrom bestromt, welcher einem Nennstrom oder einem maximalen Startstrom des elektrischen Antriebs entspricht. Die Positionierung des Rotors kann beispielsweise, wie es in der Druckschrift WO 2011/157553 A2 beschrieben ist, durchgeführt werden. Dadurch wird erreicht, dass bei Vorliegen der Nennspannung auch ein an sich bekannter Anlassvorgang verwendet werden kann.

Gemäß der Erfindung wird gemäß dem zweiten Anlassvorgang der elektrische Antrieb mit einem Anlassstrom bestromt, welcher geringer als ein Nennstrom oder geringer als ein maximaler Startstrom des elektrischen Antriebs ist, wobei auf eine vorherige Positionierung des Rotors des elektrischen Antriebs verzichtet wird.

Gemäß einer Ausführungsform wird gemäß dem zweiten Anlassvorgang der elektrische Antrieb in einem ersten Zeitintervall mit einem Anlassstrom bestromt, welcher einem Nennstrom oder einem maximalen Startstrom des elektrischen Antriebs entspricht oder geringer als der Nennstrom oder der maximale Startstrom ist, dass der elektrische Antrieb in einem zweiten Zeitintervall, welcher dem ersten Zeitintervall folgt, mit einem gegenüber dem Anlassstrom reduziertem Strom bestromt wird oder die Bestromung des elektrischen Antriebs in dem zweiten Zeitintervall unterbrochen wird, und dass der elektrische Antrieb in einem dritten Zeitintervall, welcher dem zweiten Zeitintervall folgt, erneut mit dem Anlassstrom bestromt wird.

Gemäß einer Ausführungsform ist das Haushaltsgerät ein Haushaltskältegerät mit einem Kältemittelverdichter mit dem elektrischen Antrieb, einem dem Kältemittelverdichter nachgeschalteten Kältemittelverflüssiger, einem dem Kältemittelverflüssiger nachgeschaltetem Stoppventil, wobei der elektrische Antrieb bei geöffnetem Stoppventil mit einem Anlassstrom bestromt wird, welcher geringer als ein Nennstrom oder als ein maximaler Startstrom des elektrischen Antriebs ist.

Das Verfahren gemäß dem zweiten Aspekt kann beispielsweise mittels des Haushaltsgerätes gemäß dem ersten Aspekt ausgeführt werden.

Weitere Ausführungsbeispiele der Erfindung werden Bezug nehmend auf die beiliegenden Zeichnungen näher beschrieben. Es zeigen:
- Fig. 1: ein schematisches Blockschaltbild eines Haushaltsgerätes am Beispiel eines Haushaltsgerätes; und
- Fig. 2: ein schematisches Schaltbild einer Spannungsversorgung.

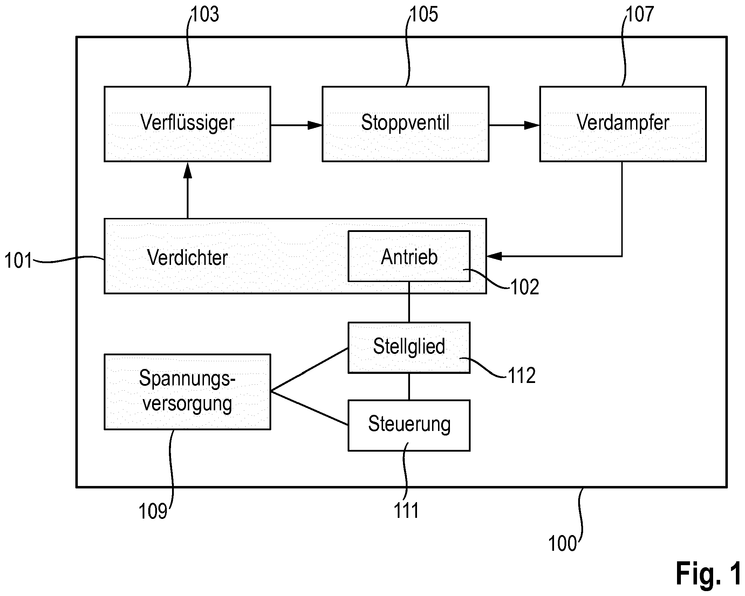

Fig. 1 zeigt ein Haushaltsgerät 100, das ein Haushaltskältegerät sein kann. Das Haushaltsgerät 100 umfasst einen Kältemittelkreislauf mit einem Kältemittelverdichter 101, einem dem Kältemittelverdichter 101 mit nachgeschaltetem Kältemittelverflüssiger 103, ein dem Kältemittelverflüssiger 103 nachgeschaltetes Stoppventil 105 sowie einen dem Stoppventil 105 nachgeschaltetem Kältemittelverdampfer 107. Ein Ausgang des Kältemittelverdampfers 107 ist mit einem Eingang des Kältemittelverdichters 101 verbunden. Der Kältemittelkreislauf kann weitere Elemente, wie beispielsweise Entspannungsventile oder Kapillare, aufweisen, welche in Fig. 1 der Einfachheit halber nicht dargestellt sind.

Das Haushaltsgerät 100 umfasst ferner eine Spannungsversorgung 109, welche vorgesehen ist, ein Stellglied 112, welchem ein elektrischer Antrieb nachgeschaltet ist, mit elektrischer Versorgungsspannung zu beaufschlagen. Ferner ist eine Steuerung 111 vorgesehen, welche einen Spannungswert der an dem Stellglied 112 mittels der Spannungsversorgung 109 anlegbaren Versorgungsspannung erfasst und in Abhängigkeit dem erfassten Spannungswert einen ersten Anlassvorgang oder einen zweiten Anlassvorgang aus einer Mehrzahl von Anlassvorgängen zum Anlassen des elektrischen Antriebs 102 des Kältemittelverdichters 101 auswählt.

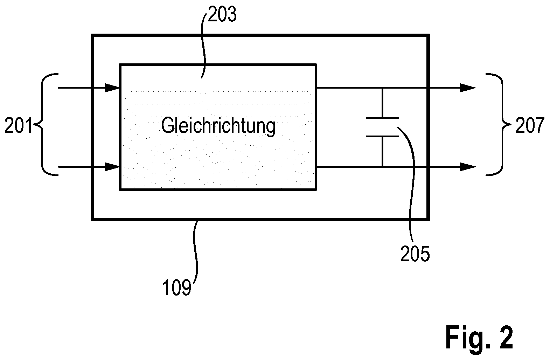

Zum Versorgen des Stellgliedes 112 mit Spannung kann die Spannungsversorgung 109 beispielsweise den in Fig. 2 schematisch dargestellten Aufbau aufweisen. Wie es in Fig. 2 dargestellt ist, umfasst die Spannungsversorgung 109 einen Eingang 201, an welchen beispielsweise eine Netzspannung, beispielsweise 230 V, anlegbar ist. Dem Eingang 201 ist eine Gleichrichtung 203 nachgeschaltet, welche eine Gleichrichtung der Netzspannung vornimmt. Der Gleichrichtung 203 ist eine Glättungskapazität 205 nachgeschaltet, um oszillierende Spannungsanteile herauszufiltern. Das Stellglied 112 kann ferner als ein Inverter ausgeprägt sein, um eine Wechselspannung aus der gleichgerichteten Spannung zu erzeugen.- Die Spannungsversorgung 109 umfasst ferner einen Ausgang 207, an dem beispielsweise eine erneute wechselgerichtete Versorgungsspannung oder eine gleichgerichtete Versorgungsspannung zum Versorgen des Stellgliedes 112 mit elektrischer Energie ausgegeben wird. Gemäß einer Ausführungsform kann der elektrische Antrieb 102 jedoch unmittelbar mit der an den Eingang 201 anlegbaren Netzspannung beaufschlagt werden.

Die an dem Ausgang 207 ausgebbare Spannung (Zwischenkreisspannung) ist proportional zu der an dem Eingang 201 anlegbaren Netzspannung. Der Proportionalitätsfaktor ist bekannt und beträgt beispielsweise 1,41, so dass ein Rückrechnen der Ausgangsspannung am Ausgang 207 auf die Eingangsspannung am Eingang 201 ermöglicht wird.

Entspricht die an dem Eingang 201 anlegbare Eingangsspannung einer Netznormspannung, beispielsweise 230 V, so kann zunächst ein bewegliches Element des elektrischen Antriebs 102 positioniert werden, wie es vorstehend beschrieben wurde. Danach kann der elektrische Antrieb mit einem Startstrom bzw. mit einem maximalen Startstrom bestromt werden.

Unterschreitet die Versorgungsspannung hingegen den vorstehend genannten Spannungswert, so wird im Falle des in Fig. 1 dargestellten Haushaltskältegerätes mit dem Stoppventil ohne eine vorherige Positionierung des beweglichen Antriebselementes, beispielsweise Rotors, des elektrischen Antriebs 102 verfahren, falls das Stoppventil 105 inaktiv bzw. geöffnet ist. In diesem Falle wird ausgenutzt, dass ein Druck des Kältemittels reduziert ist, so dass der elektrische Antrieb 102 des Kältemittelverdichters 101 nicht ein maximales Drehmoment aufbringen muss. Unterscheidet die erfasste Spannungswert den oder dass beispielsweise ein Stoppventil 105 eingesetzt wird oder dass ein Status des Stoppventils 105 bekannt ist, so wird der elektrische Antrieb mit einem Anlassstrom bestromt, welcher geringer als ein Startstrom, d.h. ein Nennstrom, des elektrischen Antriebs ist. Diese Ausführungsform ist insbesondere dann vorteilhaft, falls die verfügbare Versorgungsspannung nicht ausreicht, um beispielsweise eine Positionierung des elektrischen Antriebselementes durchzuführen bzw. um einen Start mit einem maximalen Startstrom des elektrischen Antriebs 102 zu ermöglichen.

Unterschreitet die Versorgungsspannung den Spannungswert, so kann gemäß einem nicht von der Erfindung umfassten Beispiel nach einer Positionierung des beweglichen Antriebselementes, insbesondere nach einer Kolbenpositionierung, und einem Anlassen des elektrischen Antriebs eine Pause eingefügt werden, um die in Fig. 2 dargestellte Glättungskapazität 205, welche ein Zwischenkreiskondensator sein kann, wieder aufzuladen. Hierbei wird der elektrische Antrieb in einem ersten Zeitintervall mit einem Anlassstrom bestromt, welcher beispielsweise einem Nennstrom oder einem maximalen Startstrom des elektrischen Antriebs entspricht. In einem zweiten Zeitintervall wird der elektrische Antrieb entweder nicht bestromt oder mit einem reduzierten Anlassstrom beaufschlagt, was zulässt, dass die Glättungskapazität 205 wiederaufgeladen wird. Nach dem Aufladen der Glättungskapazität 205 kann der elektrische Antrieb mit dem Anlassstrom, welcher beispielsweise dem Nennstrom oder dem maximalen Startstrom des elektrischen Antriebs 102 entspricht, bestromt und somit angelassen werden.

### Bezugszeichenliste

- 100: Haushaltsgerät
- 101: Kältemittelverdichter
- 102: elektrischer Antrieb
- 103: Kältemittelverflüssiger
- 105: Stoppventil
- 107: Kältemittelverdampfer
- 109: Spannungsversorgung
- 111: Steuerung
- 112: Stellglied
- 201: Eingang
- 203: Gleichrichtung
- 205: Glättungskapazität
- 207: Ausgang

## Patentansprüche

1. Haushaltsgerät (100) mit einer Spannungsversorgung (109) zum Versorgen eines Stellglieds (112) mit einer elektrischen Versorgungsspannung, wobei dem Stellglied (112) ein elektrischer Antrieb (102) nachgeschaltet ist, sowie einer Steuerung (111) zum Steuern des elektrischen Antriebs (102), wobei die Steuerung (111) ausgebildet ist, einen Spannungswert der Versorgungsspannung zu erfassen und den elektrischen Antrieb (102) gemäß einem ersten Anlassvorgang anzulassen, falls der Spannungswert einen Schwellwert erreicht, und den elektrischen Antrieb (102) gemäß einem zweiten Anlassvorgang anzulassen, falls der Spannungswert den Schwellwert unterschreitet, wobei die Spannungsversorgung (109) einen Gleichrichter und eine dem Gleichrichter nachgeschaltete Glättungskapazität (205) aufweist, wobei das Stellglied (112) als ein der Glättungskapazität (205) nachgeschalteter Inverter ausgeprägt ist, wobei die Spannungsversorgung (109) den Inverter aufweist, **dadurch gekennzeichnet, dass** die Steuerung (111) gemäß dem ersten Anlassvorgang ausgebildet ist, einen Rotor des elektrischen Antriebs (102) zu positionieren und den elektrischen Antrieb (102) nach der Positionierung des Rotors mit einem Anlassstrom zu bestromen, welcher einem Nennstrom oder einem maximalen Startstrom des elektrischen Antriebs (102) entspricht, wobei die Steuerung (111) gemäß dem zweiten Anlassvorgang ausgebildet ist, den elektrischen Antrieb (102) mit einem Anlassstrom zu bestromen, welcher geringer als ein Nennstrom oder geringer als ein maximaler Startstrom des elektrischen Antriebs (102) ist, wobei auf eine vorherige Positionierung des Rotors des elektrischen Antriebs (102) verzichtet wird.

2. Haushaltsgerät (100) nach Anspruch 1, **dadurch gekennzeichnet, dass** der Schwellwert ein Amplitudennennwert einer Netzspannung oder ein Amplitudennennwert einer gleichgerichteten Netzspannung ist.

3. Haushaltsgerät (100) nach einem der vorstehenden Ansprüche, **dadurch gekennzeichnet, dass** die Steuerung (111) gemäß dem zweiten Anlassvorgang ausgebildet ist, den elektrischen Antrieb (102) in einem ersten Zeitintervall mit einem Anlassstrom zu bestromen, welcher einem Nennstrom des elektrischen Antriebs (102) entspricht, den elektrischen Antrieb (102) in einem zweiten Zeitintervall, welcher dem ersten Zeitintervall folgt, mit einem gegenüber dem Anlassstrom reduziertem Strom zu bestromen, und den elektrischen Antrieb (102) in einem dritten Zeitintervall, welcher dem zweiten Zeitintervall folgt, erneut mit dem Anlassstrom zu bestromen.

4. Haushaltsgerät (100) nach einem der vorstehenden Ansprüche, **dadurch gekennzeichnet, dass** das Haushaltsgerät (100) ein Haushaltskältegerät mit einem Kältemittelverdichter (101) mit dem elektrischen Antrieb (102), einem dem Kältemittelverdichter (101) nachgeschalteten Kältemittelverflüssiger (103), einem dem Kältemittelverflüssiger (103) nachgeschaltetem Stoppventil (105) ist.

5. Haushaltsgerät (100) nach Anspruch 4, **dadurch gekennzeichnet, dass** die Steuerung (111) gemäß dem zweiten Anlassvorgang ausgebildet ist, bei geöffnetem Stoppventil (105) den elektrischen Antrieb (102) mit einem Anlassstrom zu bestromen, welcher geringer als ein Nennstrom oder als ein maximaler Startstrom des elektrischen Antriebs ist.

6. Haushaltsgerät (100) nach einem der vorstehenden Ansprüche, **dadurch gekennzeichnet, dass** die Steuerung (111) programmtechnisch eingerichtet und ausgebildet ist, ein Steuerprogramm zum Ausführen des ersten Anlassvorgangs oder des zweiten Anlassvorgangs aus einem Speicher auszulesen und das ausgelesene Steuerprogramm auszuführen, um den jeweiligen Anlassvorgang auszuführen.

7. Verfahren zum Anlassen eines elektrischen Antriebs in einem Haushaltsgerät (100), das eine Spannungsversorgung (109) zum Versorgen eines Stellglieds (112) mit einer elektrischen Versorgungsspannung, wobei dem Stellglied (112) der elektrischer Antrieb (102) nachgeschaltet ist, sowie eine Steuerung (111) zum Steuern des elektrischen Antriebs (102) umfasst, wobei die Spannungsversorgung (109) einen Gleichrichter und eine dem Gleichrichter nachgeschaltete Glättungskapazität (205) aufweist, wobei das Stellglied (112) als ein der Glättungskapazität (205) nachgeschalteter Inverter ausgeprägt ist, wobei die Spannungsversorgung (109) den Inverter aufweist, wobei ein Spannungswert der Versorgungsspannung erfasst wird und der elektrischen Antrieb (102) gemäß einem ersten Anlassvorgang angelassen wird, falls der Spannungswert einen Schwellwert erreicht, und der elektrische Antrieb (102) gemäß einem zweiten Anlassvorgang angelassen wird, falls die Spannungswert den Schwellwert unterschreitet, **dadurch gekennzeichnet, dass** gemäß dem ersten Anlassvorgang ein Rotor des elektrischen Antriebs positioniert wird und dass der elektrische Antrieb nach der Positionierung des Rotors mit einem Anlassstrom bestromt wird, welcher einem Nennstrom oder einem maximalen Startstrom des elektrischen Antriebs entspricht, wobei gemäß dem zweiten Anlassvorgang, der elektrische Antrieb mit einem Anlassstrom bestromt wird, welcher geringer als ein Nennstrom oder geringer als ein maximaler Startstrom des elektrischen Antriebs ist, wobei auf eine vorherige Positionierung des Rotors des elektrischen Antriebs (102) verzichtet wird.

8. Verfahren nach Anspruch 7, **dadurch gekennzeichnet, dass** gemäß dem zweiten Anlassvorgang, der elektrische Antrieb in einem ersten Zeitintervall mit einem Anlassstrom bestromt wird, welcher einem Nennstrom des elektrischen Antriebs entspricht, dass der elektrische Antrieb in einem zweiten Zeitintervall, welcher dem ersten Zeitintervall folgt, mit einem gegenüber dem Anlassstrom reduziertem Strom bestromt wird, und dass der elektrische Antrieb in einem dritten Zeitintervall, welcher dem zweiten Zeitintervall folgt, erneut mit dem Anlassstrom bestromt wird.

9. Verfahren nach Anspruch 7 oder 8, **dadurch gekennzeichnet, dass** das Haushaltsgerät (100) ein Haushaltskältegerät mit einem Kältemittelverdichter (101) mit dem elektrischen Antrieb, einem dem Kältemittelverdichter (101) nachgeschalteten Kältemittelverflüssiger (103), einem dem Kältemittelverflüssiger (103) nachgeschaltetem Stoppventil (105) ist, und dass der elektrische Antrieb bei geöffnetem Stoppventil (105) mit einem Anlassstrom bestromt wird, welcher geringer als ein Nennstrom oder als ein maximaler Startstrom des elektrischen Antriebs ist.

## Claims

1. Household appliance (100) with a power supply (109) for supplying a supply voltage to an actuator (112), wherein the actuator (112) is connected upstream of an electric drive (102), and a controller (111) for controlling the electric drive (102), wherein the controller (111) is designed to detect a voltage value of the supply voltage, and to start the electric drive (102) according to a first start-up procedure if the voltage value attains a threshold value, and to start the electric drive (102) according to a second start-up procedure if the voltage value drops below the threshold value, wherein the power supply (109) has a rectifier and a smoothing capacitor (205) connected downstream of the rectifier, wherein the actuator (112) is embodied as an inverter connected downstream of the smoothing capacitor (205), wherein the power supply (109) has the inverter, **characterised in that** the controller (111) is designed according to the first start-up procedure to position a rotor of the electric drive (102), and once the rotor is positioned, to energise the electric drive (102) with a starting current corresponding to a rated current or a maximum starting current of the electric drive (102), wherein the controller (111) is designed according to the second start-up procedure to energise the electric drive (102) with a starting current that is less than a rated current or less than a maximum starting current of the electric drive (102), wherein prior positioning of the rotor of the electric drive (102) is dispensed with.

2. Household appliance (100) according to claim 1, **characterised in that** the threshold value is a rated amplitude value of a mains voltage or a rated amplitude value of a rectified mains voltage.

3. Household appliance (100) according to one of the preceding claims, **characterised in that** the controller (111) is designed according to the second start-up procedure, in a first time interval to energise the electric drive (102) with a starting current that corresponds to a rated current of the electric drive (102), in a second time interval, which follows the first time interval, to energise the electric drive (102) with a current that is lower than the starting current, and in a third time interval, which follows the second time interval, to energise the electric drive (102) again with the starting current.

4. Household appliance (100) according to one of the preceding claims, **characterised in that** the household appliance (100) is a household refrigerator with a refrigerant compressor (101) comprising the electric drive (102), a refrigerant condenser (103) connected downstream of the refrigerant compressor (101), a stop valve (105) connected downstream of the refrigerant condenser (103).

5. Household appliance (100) according to claim 4, **characterised in that** the controller (111) is designed according to the second start-up procedure, when the stop valve (105) is open, to energise the electric drive (102) with a starting current that is less than a rated current or less than a maximum starting current of the electric drive.

6. Household appliance (100) according to one of the preceding claims, **characterised in that** the controller (111) is configured and designed on a programming basis to read from a memory a control program for performing the first start-up procedure or the second start-up procedure, and to execute the read control program in order to perform the relevant start-up procedure.

7. Method for starting an electric drive in a household appliance (100) which comprises a power supply (109) for supplying a supply voltage to an actuator (112), wherein the actuator (112) is connected upstream of the electric drive (102), and a controller (111) for controlling the electric drive (102), wherein the power supply (109) comprises a rectifier and a smoothing capacitor (205) connected downstream of the rectifier, wherein the actuator (112) is embodied as an inverter connected downstream of the smoothing capacitor (205), wherein the power supply (109) comprises the inverter, wherein a voltage value of the supply voltage is detected, and the electric drive (102) is started according to a first start-up procedure if the voltage value attains a threshold value, and the electric drive (102) is started according to a second start-up procedure if the voltage value drops below the threshold value, **characterised in that,** according to the first start-up procedure, a rotor of the electric drive is positioned, and once the rotor is positioned, the electric drive is energised with a starting current corresponding to a rated current or a maximum starting current of the electric drive, wherein, according to the second start-up procedure, the electric drive is energised with a starting current that is less than a rated current or less than a maximum starting current of the electric drive, wherein prior positioning of the rotor of the electric drive (102) is dispensed with.

8. Method according to claim 7, **characterised in that** according to the second start-up procedure, in a first time interval, the electric drive is energised with a starting current that corresponds to a rated current of the electric drive, in a second time interval, which follows the first time interval, the electric drive is energised with a current that is lower than the starting current, and in a third time interval, which follows the second time interval, the electric drive is energised again with the starting current.

9. Method according to claim 7 or 8, **characterised in that** the household appliance (100) is a household refrigerator that comprises a refrigerant compressor (101) comprising the electric drive, a refrigerant condenser (103) connected downstream of the refrigerant compressor (101), a stop valve (105) connected downstream of the refrigerant condenser (103), and **in that** when the stop valve (105) is open, the electric drive is energised with a starting current that is less than a rated current or less than a maximum starting current of the electric drive.

## Revendications

1. Appareil ménager (100) comprenant une alimentation en tension (109) destinée à alimenter un organe de commande (112) avec une tension d'alimentation électrique, un entraînement électrique (102) étant installé en aval de l'organe de commande (112), et comprenant une commande (111) destinée à commander l'entraînement électrique (102), la commande (111) étant réalisée pour détecter une valeur de tension de la tension d'alimentation et démarrer l'entraînement électrique (102) suivant une première opération de démarrage au cas où la valeur de tension atteigne une valeur seuil, et pour démarrer l'entraînement électrique (102) suivant une deuxième opération de démarrage au cas où la valeur de tension dépasse vers le bas la valeur seuil, l'alimentation en tension (109) présentant un onduleur et une capacité de lissage (205) installée en aval de l'onduleur, l'organe de commande (112) étant réalisé comme un onduleur installé en aval de la capacité de lissage (205), **caractérisé en ce que** la commande (111), suivant la première opération de démarrage, est réalisée pour positionner un rotor de l'entraînement électrique (102) et, après le positionnement du rotor, pour alimenter l'entraînement électrique (102) avec un courant de démarrage qui correspond à un courant nominal ou à un courant de démarrage maximal de l'entraînement électrique (102), la commande (111), suivant la deuxième opération de démarrage, étant réalisée pour alimenter l'entraînement électrique (102) avec un courant de démarrage qui est inférieur à un courant nominal ou inférieur à un courant de démarrage maximal de l'entraînement électrique (102), en renonçant à un positionnement précédent du rotor de l'entraînement électrique (102).

2. Appareil ménager (100) selon la revendication 1, **caractérisé en ce que** la valeur seuil est une valeur nominale d'amplitude d'une tension de réseau ou une valeur nominale d'amplitude d'une tension de réseau redressée.

3. Appareil ménager (100) selon l'une quelconque des revendications précédentes, **caractérisé en ce que** la commande (111), suivant la deuxième opération de démarrage, est réalisée pour alimenter l'entraînement électrique (102) pendant un premier intervalle de temps avec un courant de démarrage qui correspond à un courant nominal de l'entraînement électrique (102), pour alimenter l'entraînement électrique (102) pendant un deuxième intervalle de temps, lequel succède au premier intervalle de temps, avec un courant réduit par rapport au courant de démarrage, et pour alimenter l'entraînement électrique (102) pendant un troisième intervalle de temps, lequel succède au deuxième intervalle de temps, de nouveau avec le courant de démarrage.

4. Appareil ménager (100) selon l'une quelconque des revendications précédentes, **caractérisé en ce que** l'appareil ménager (100) est un appareil frigorifique à usage domestique comprenant un compresseur frigorifique (101) doté de l'entraînement électrique (102), un condenseur frigorifique (103) installé en aval du compresseur frigorifique (101), une vanne d'arrêt (105) installée en aval du condenseur frigorifique (103).

5. Appareil ménager (100) selon la revendication 4, **caractérisé en ce que** la commande (111), suivant la deuxième opération de démarrage, est réalisée, lorsque la vanne d'arrêt (105) est ouverte, pour alimenter l'entraînement électrique (102) avec un courant de démarrage qui est inférieur à un courant nominal ou à un courant de démarrage maximal de l'entraînement électrique.

6. Appareil ménager (100) selon l'une quelconque des revendications précédentes, **caractérisé en ce que** la commande (111), au point de vue programme, est configurée et réalisée pour lire un programme de commande destiné à exécuter la première opération de démarrage ou la deuxième opération de démarrage à partir d'une mémoire et pour exécuter le programme de commande lu afin d'exécuter l'opération de démarrage respective.

7. Procédé de démarrage d'un entraînement électrique dans un appareil ménager (100), qui comprend une alimentation en tension (109) destinée à alimenter un organe de commande (112) avec une tension d'alimentation électrique, l'entraînement électrique (102) étant installé en aval de l'organe de commande (112), ainsi qu'une commande (111) destinée à commander l'entraînement électrique (102), l'alimentation en tension (109) présentant un redresseur et une capacité de lissage (205) installée en aval du redresseur, l'organe de commande (112) étant réalisé comme un onduleur installé en aval de la capacité de lissage (205), l'alimentation en tension (109) présentant l'onduleur, une valeur de tension de la tension d'alimentation étant détectée et l'entraînement électrique (102) étant démarré suivant une première opération de démarrage au cas où la valeur de tension atteigne une valeur seuil, et l'entraînement électrique (102), selon une deuxième opération de démarrage, étant démarré au cas où la valeur de tension dépasse vers le bas la valeur seuil, **caractérisé en ce que** suivant la première opération de démarrage, un rotor de l'entraînement électrique est positionné et **en ce que** l'entraînement électrique, après le positionnement du rotor, est alimenté avec un courant de démarrage qui correspond à un courant nominal ou à un courant de démarrage maximal de l'entraînement électrique, l'entraînement électrique, suivant la deuxième opération de démarrage, étant alimenté avec un courant de démarrage qui est inférieur à un courant nominal ou inférieur à un courant de démarrage maximal de l'entraînement électrique, en renonçant à un positionnement précédent du rotor de l'entraînement électrique (102).

8. Procédé selon la revendication 7, **caractérisé en ce que,** suivant la deuxième opération de démarrage, l'entraînement électrique est alimenté pendant un premier intervalle de temps avec un courant de démarrage qui correspond à un courant nominal de l'entraînement électrique, **en ce que** l'entraînement électrique, pendant un deuxième intervalle de temps qui succède au premier intervalle de temps, est alimenté avec un courant réduit par rapport au courant de démarrage, et **en ce que** l'entraînement électrique, pendant un troisième intervalle de temps qui succède au deuxième intervalle de temps, est de nouveau alimenté avec le courant de démarrage.

9. Procédé selon la revendication 7 ou 8, **caractérisé en ce que** l'appareil ménager (100) est un appareil frigorifique à usage domestique comprenant un compresseur frigorifique (101) doté de l'entraînement électrique (102), un condenseur frigorifique (103) installé en aval du compresseur frigorifique (101), une vanne d'arrêt (105) installée en aval du condenseur frigorifique (103), et **en ce que** l'entraînement électrique, lorsque la vanne d'arrêt (105) est ouverte, est alimenté avec un courant de démarrage qui est inférieur à un courant nominal ou à un courant de démarrage maximal de l'entraînement électrique.
